# FASCICULE DE BREVET EUROPEEN

(11) **EP 3 724 453 B1**
(45) Date de publication et mention de la délivrance du brevet: **12.11.2025**
(21) Numéro de dépôt: 17842290.3
(22) Date de dépôt: 12.12.2017
(51) Int. Cl.: F01D 5/10, F01D 5/22, F01D 5/30, F01D 5/16, F01D 25/06, F16F 7/01

(54) **AMORTISSEUR DE VIBRATIONS POUR UNE AUBE DE ROTOR DE TURBOMACHINE**
SCHWINGUNGSDÄMPFER FÜR EINE TURBOMASCHINENROTORSCHAUFEL
VIBRATION DAMPER FOR A TURBOMACHINE ROTOR VANE

(43) Date de publication de la demande: 21.10.2020
(73) Titulaire: Safran Helicopter Engines, 64510 Bordes (FR)
(72) Inventeur: POLLET, Laetitia, 77550 MOISSY-CRAMAYEL (FR)
(74) Mandataire: Gevers & Orès
(86) Numéro de dépôt international: PCT/FR2017/053529
(87) Numéro de publication internationale: WO 2019/115886

(56) Documents cités:
- EP-A1- 3 054 103
- EP-A1- 3 054 103
- DE-A1- 102010 046 579
- DE-A1- 102010 046 579
- DE-A1- 102016 204 255
- DE-A1- 102016 204 255
- FR-A1- 2 998 497
- FR-A1- 3 029 829
- US-A- 2 877 980

## Description

### DOMAINE TECHNIQUE

L'invention concerne notamment un amortisseur de vibrations en particulier pour une aube de rotor de turbomachine. L'invention s'applique en particulier aux rotors de turbine de turbomachine, mais peut s'appliquer également aux soufflantes ou aux compresseurs basse pression à aubes rapportées.

### ETAT DE LA TECHNIQUE

L'arrière-plan technique comprend notamment les documents EP 3054103A1 et US2877980A.

Une turbomachine comporte au moins une turbine d'entraînement d'un compresseur, lequel délivre de l'air comprimé en entrée de la chambre de combustion. Les aubes des rotors constituant les étages de la turbine subissent une élévation importante en température par contact avec les gaz chauds sortant de la chambre après combustion. Les gaz chauds circulent alors dans une veine canalisée par un conduit annulaire, et entraînent en rotation les aubes des rotors de la turbine disposées dans cette veine.

Les aubes et la périphérie des disques sur lesquels elles sont agencées nécessitent donc un refroidissement énergique. L'air de refroidissement provient de l'extérieur et/ou d'une fraction de l'air d'un étage du compresseur associé à un étage de la turbine. Une circulation d'air autour des disques permet également de refroidir les faces de ceux-ci.

Une aube rapportée comprend en général une pale reliée par une plateforme à un pied, ce pied étant par exemple du type sapin ou queue d'aronde et étant destiné à être engagé par emmanchement dans une alvéole de forme complémentaire à la périphérie d'un disque. Les plateformes des aubes forment la méridienne interne de la veine d'air au niveau du rotor.

La présence des flux gazeux précités et l'excitation dynamique de la rotation des aubes créent des phénomènes de vibrations. Pour limiter ces vibrations, les aubes sont équipées d'amortisseurs du type à friction en appui sous leurs plateformes

Ces amortisseurs se présentent en général sous la forme de petites tôles embouties avec des bords tombés plus ou moins importants et l'énergie générée par le mouvement des pales et des plateformes en vibration est dissipée par frottement de ces tôles contre les plateformes. Dans leurs mouvements, les tôles sont plaquées contre les plateformes par les forces centrifuges, le phénomène de frottement alternant entre phases de glissement et phases d'adhérence aux plateformes. Plus l'adaptation entre l'amortisseur et la plateforme est assurée, meilleur est l'amortissement. De tels amortisseurs élastiques à friction sont décrits par exemple dans le document FR-A1-2 503 247.

L'épaisseur de la tôle, de l'ordre de 0,2 à 1 mm, est choisie en fonction des conditions vibratoires de la pale et de l'excitation dynamique qu'elle peut subir, en particulier au regard de ses vitesses de résonance. Une masse optimale est définie pour amortir une résonance précise de chaque contexte vibratoire, compte tenus du type de résonance de la turbine ainsi que de la gamme de vitesses de rotation de la turbine et d'autres critères de conception (géométrie, matériau, etc.). En particulier, dans le cas de turbines lentes ou de flux d'air de basses pressions, la masse optimale est sensiblement supérieure à celle des turbines rapides.

Ainsi, dans les turbomachines puissantes à turbine libre multi-étages, peu chargées mécaniquement, les vitesses des turbines dites lentes (en dessous de 30 000 tr/min) sont sensiblement inférieures aux vitesses plus rapides des turbines mono-étage (environ de 35 à 45 000 tr/min). De plus, les turbines bi-étages ont des pales plus élancées et plus nombreuses (par exemple de 40 à 60 pales), et donc moins d'espace inter plateformes entre ces pales.

Il devient donc de plus en plus difficile d'atteindre la masse optimale avec cette technologie et donc de piloter les forces de frottement. De plus, l'utilisation de tôle d'épaisseur plus importante pour atteindre une masse optimale élevée, par exemple supérieure à 1 mm, lorsque les cavités de logement le permettent, nuit à la dissipation de l'énergie ainsi qu'à la souplesse de la tôle, c'est-à-dire à sa capacité à se déformer sous champ centrifuge, donc à sa qualité de frottement et dissipation des vibrations. L'apparition de points d'usure très localisée, sous les plateformes, confirment alors la mauvaise répartition des zones de contact entre les amortisseurs et les plateformes.

Dans ces conditions, une incompatibilité peut être relevée entre le respect de la masse optimale qui, définie par le contexte vibratoire, tend à augmenter de manière générale au regard des turbines lentes et la souplesse de l'amortisseur ainsi que sa qualité au frottement. En effet, l'utilisation de tôles de plus en plus épaisses, logées dans des espaces réduits entre plateformes dans le cas des turbines lentes, conduit alors à une dégradation de la souplesse de l'amortisseur et de l'adaptation au contact aube/amortisseur et donc de l'amortissement induit.

La demanderesse a ainsi cherché à lever cette incompatibilité en fournissant des amortisseurs de masse optimale apte à amortir une résonance selon un contexte vibratoire de la turbine, en particulier pour des turbines lentes, tout en favorisant une souplesse d'adaptation aux surfaces d'appui des logements des amortisseurs. Pour ce faire, l'invention prévoit de séparer les fonctions de masse et de souplesse.

On a déjà proposé une solution dans ce sens, dans le document FR-A1-2 970 033. Ce document décrit un procédé d'amortissement de pales montées sur des disques de roue lente de turbine à gaz, la turbine présentant des logements sous des plateformes de pales, aptes à recevoir des amortisseurs de vibration. Le procédé consiste à réaliser de manière indépendante une partie de structure et de plaquage contre la plateforme et une partie masse de concentration des efforts pour le pilotage des forces de frottement contre la plateforme via le plaquage, à coupler les deux parties ensemble de manière réversible et à insérer les amortisseurs ainsi constitués en deux parties dans les logements dédiés.

Le couplage des deux parties est formé en enveloppant au moins partiellement la partie masse par au moins une zone de plaquage de la partie souple contre la plateforme. La partie souple est suffisamment flexible pour s'adapter au niveau de contact requis, par exemple pour compenser un positionnement non parfait, pour s'adapter à la dispersion des géométries sous plateforme de pale en pale ou pour neutraliser les tolérances de fonderie. La partie masse peut être changée par une autre masse de matériau différent ou peut être augmentée par ajout d'une masse supplémentaire en cas de déficit d'amortissement.

La présente invention propose un perfectionnement à la technologie.

### EXPOSÉ DE L'INVENTION

L'invention propose un rotor de turbomachine, selon la revendication 1,

La solution consiste donc en un amortisseur caissonné contenant de la poudre. Ceci est avantageux car le volume de poudre enfermé est ajusté pour atteindre une masse prédéterminée sans participer à la raideur de l'amortisseur.

Le rotor selon l'invention peut comprendre une ou plusieurs des caractéristiques suivantes prises isolément les unes des autres ou en combinaison les unes avec les autres :
- le caisson est fermé de manière étanche pour éviter que la poudre ne s'échappe involontairement dudit caisson ;
- la poudre occupe l'intégralité du volume interne dudit caisson ;
- la poudre occupe une partie seulement du volume interne dudit caisson ;
- le caisson a une forme générale sensiblement parallélépipédique ;
- le caisson et la poudre sont réalisés dans un même matériau métallique ;
- le caisson est obtenu par fusion d'une poudre identique à celle contenue dans le caisson.
- le caisson comporte des bords tombés pour assurer son maintien dans son logement à l'arrêt du moteur (c'est-à-dire à l'annulation des efforts centrifuges).

La présente invention concerne également un procédé de réalisation d'un amortisseur tel que décrit ci-dessus, dans lequel il comprend une étape de réalisation dudit caisson par fabrication additive par fusion sélective sur lits de poudre, la poudre contenue dans le caisson étant celle utilisée pour fabriquer le caisson.

Le caisson peut être entièrement réalisé et fermé de manière étanche par fabrication additive et contient un volume de poudre sensiblement égal au volume interne du caisson. En variante, le caisson est réalisé par fabrication additive avec au moins un orifice, qui est utilisé pour évacuer une partie de la poudre contenue dans le caisson et qui est ensuite refermé de manière étanche par exemple par soudage.

### BREVE DESCRIPTION DES FIGURES

D'autres caractéristiques et avantages de l'invention apparaîtront à la lecture de la description détaillée d'exemples de réalisation ci-après, en référence aux figures annexées qui représentent, respectivement :
- la figure 1 est une demi vue schématique en coupe longitudinale d'un exemple d'un rotor de turbine équipé d'amortisseurs de vibrations ;
- la figure 2 est une vue schématique partielle en perspective d'un rotor de turbine équipé d'amortisseurs de vibrations ;
- la figure 3 est une vue schématique en perspective d'un amortisseur de vibrations selon l'invention ;
- la figure 4 est une vue schématique en coupe selon la ligne IV-IV de la figure 3 ;
- la figure 5 est une vue très schématique d'une machine de réalisation d'un amortisseur selon l'invention, par fabrication additive ;
- la figure 6 comprend des vues schématiques en coupe similaires à celle de la figure 4 et illustre un mode de réalisation d'un procédé de réalisation de cet amortisseur ;
- les figures 7 à 9 sont des vues schématiques en coupe similaires à celle de la figure 4 et illustre des variantes de réalisation de l'amortisseur selon l'invention ; et
- les figures 10 à 12 sont des vues schématiques en perspective et en coupe d'autres variantes de réalisation de l'amortisseur selon l'invention.

### DESCRIPTION DETAILLEE D'UN MODE DE REALISATION

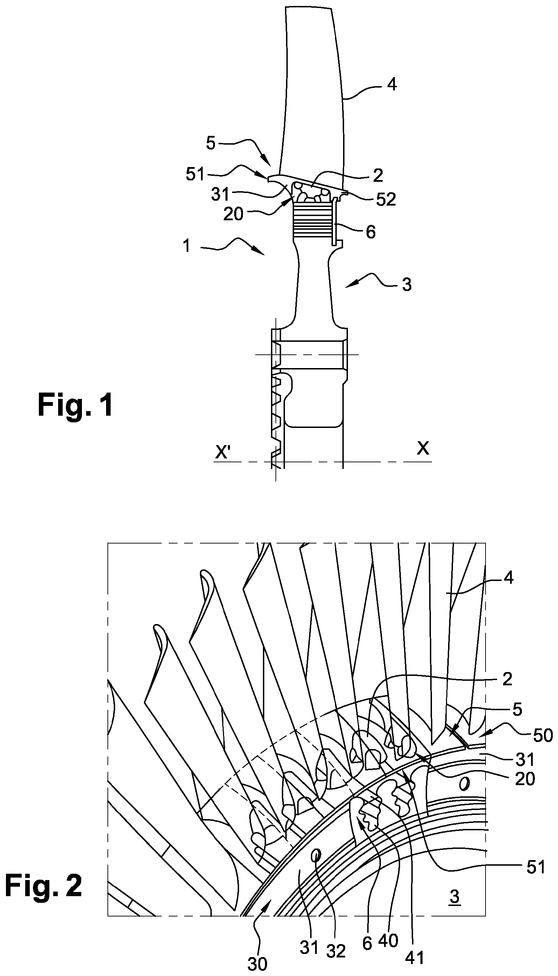

En référence aux figures, les termes « avant » et « arrière » se rapportent aux éléments « amont » et « aval » au regard du sens défini par l'axe central de rotation X'X de la figure 1, qui est l'axe longitudinal d'une turbomachine.

La figure 1 illustre, de manière générale, la vue en coupe d'une roue de turbine 1 de turbomachine, cette roue 1 intégrant des amortisseurs de vibrations 2. La roue 1 présente une répétitivité cyclique selon l'axe de la turbine X'X et comporte un disque central 3 sur lequel sont montées en périphérie des aubes 4. Chaque aube 4 comprend une pale reliée par une plateforme 5 à un pied, qui est ici du type sapin et est inséré par emmanchement dans une alvéole de la périphérie du disque 3 de forme complémentaire de celle du pied.

Des plaquettes de freinage 31 des aubes sont insérées pour bloquer les pieds dans leurs alvéoles. Ces plaquettes peuvent avantageusement être remplacées selon les architectures par d'autres systèmes de freinage axial tels que des fils freins, des rivets, des joncs, des flasques ou équivalents.

Chaque amortisseur 2 est intégré dans un logement 20 limité par une plateforme 5, deux échasses de pieds d'aubes adjacentes 4 (les échasses étant les parties radialement externes des pieds) et une plaquette arrière 31. La plateforme 5 présente un profil formant en extrémité axiale des renforts de blocage axiaux avant et arrière 51 et 52 de l'amortisseur 2 dans son logement.

La figure 2 illustre une vue partielle de la roue 1 dans laquelle une couronne périphérique annulaire 30 du disque 3 accueille les pieds 40 des aubes 4 et les amortisseurs 2. Les flancs de la couronne 30 sont fermés par les plaquettes 31 formant des sections installées par glissement dans des gorges formées dans les plateformes 5 et la couronne 30, afin de bloquer axialement le déplacement des pieds d'aubes 40 dans leurs alvéoles. Les plateformes 5 forment un anneau 50 duquel s'élancent radialement vers l'extérieur les pales des aubes.

L'amortisseur 2 est bloqué, dans son logement ou cavité, latéralement par les échasses 41 des pieds d'aubes, radialement par la plateforme 5 et axialement pas les renforts de pales 51 et 52 (cf. figure 1)

Une partie de la figure 2 apparaît en transparence et un renfort a été retiré afin de mieux faire apparaître les amortisseurs 2 et leurs logements 20. Chaque logement 20 est formé sous les faces intérieures 51 de deux plateformes juxtaposées 5, entre deux échasses 41 de deux pieds 40 de pales 4 et une avancée ou interpale 6 de la couronne 30. Les amortisseurs exercent alors également une fonction d'étanchéité en réduisant la section de fuite inter-plateformes entre les plateformes juxtaposées.

Les amortisseurs 2 peuvent disposer axialement d'un degré de liberté selon l'axe X'X et d'un jeu - par exemple de 1/10^{ème} à quelques dixièmes de millimètre - entre la plateforme 5 et la plaquette 6 et donc, sous le champ centrifuge, entre cette plaquette et l'amortisseur.

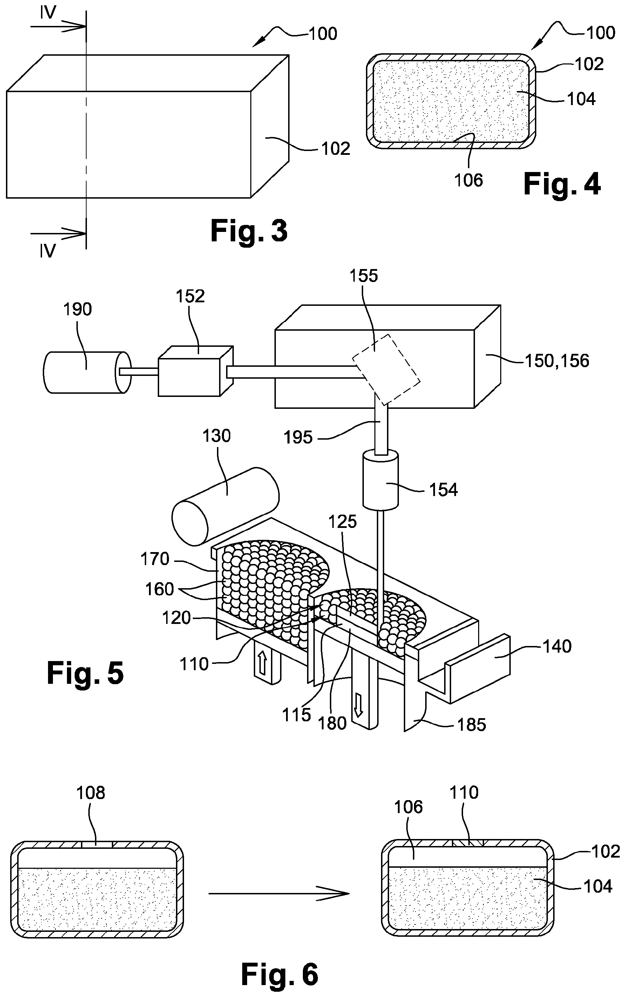

Les figures 3 et 4 illustrent de manière très schématique un amortisseur de vibrations 100 selon l'invention. Cet amortisseur comprend essentiellement deux parties à savoir une première partie de structure 102 configurée pour être au contact de la plateforme d'une aube dans l'exemple précité, et une seconde partie de masse 104 configurée pour assurer une fonction d'amortissement des vibrations. La première partie 102 se présente sous la forme d'un caisson à cavité interne 106 étanche et la seconde partie se présente sous la forme d'une poudre contenue dans cette cavité 106.

L'amortisseur 100 a une forme générale parallélépipédique dans l'exemple représenté. Cette forme est imposée par le caisson qui a donc une forme générale parallélépipédique. Le caisson comprend des parois relativement fines, qui sont obtenues par fusion d'une poudre métallique, comme cela sera décrit plus en détail dans ce qui suit. Naturellement, la forme de l'amortisseur et de son caisson dépend de son environnement de montage. Dans le cas particulier précité où l'amortisseur est monté dans un logement situé sous des plateformes d'aubes, l'amortisseur est configuré pour être inséré dans ce logement et venir en fonctionnement, par l'une de ses parois, au contact des plateformes de deux aubes adjacentes, en vue de l'amortissement de leurs vibrations.

La cavité 106 est remplie en partie ou complètement par la poudre, qui est la même poudre utilisée pour la réalisation des parois du caisson. Ceci est rendu possible par le mode de fabrication du caisson, par fabrication additive.

La figure 5 montre une machine de fabrication d'un amortisseur 100 par fabrication additive et en particulier par fusion sélective de couches de poudre par faisceau de haute énergie.

La machine comprend un bac d'alimentation 170 contenant de la poudre métallique, un rouleau 130 pour transvaser cette poudre depuis ce bac 170 et étaler une première couche 110 de cette poudre sur un support de construction 180 (il peut s'agir d'un support massif, d'une partie d'une autre pièce ou d'une grille support utilisée pour faciliter la construction de certaines pièces).

La machine comprend également un bac de recyclage 140 pour récupérer une infime partie de la poudre usagée (en particulier non fondue ou non frittée) et la majeure partie de la poudre en excès, après étalement de la couche de poudre sur le support de construction 180. Ainsi, la majeure partie de la poudre du bac de recyclage est composée de poudre neuve. Aussi, ce bac de recyclage 140 est communément appelé par la profession bac de trop plein ou cendrier.

Cette machine comprend également un générateur 190 de faisceau laser 195, et un système de pilotage 150 apte à diriger ce faisceau 195 sur n'importe quelle région du support de construction 180 de façon à balayer n'importe quelle région d'une couche de poudre. La mise en forme du faisceau laser et la variation de son diamètre sur le plan focal se font respectivement au moyen d'un dilatateur de faisceau 152 et d'un système de focalisation 154, l'ensemble constituant le système optique.

Cette machine peut appliquer le procédé assimilable à un procédé de dépôt direct de métal ou DMD (acronyme de l'anglais *Direct Metal Deposition*) sur une poudre et peut utiliser n'importe quel faisceau de haute énergie en place du faisceau laser 195, tant que ce faisceau est suffisamment énergétique pour dans le premier cas fondre ou dans l'autre cas former des cols ou ponts entre les particules de poudre et une partie du matériau sur lequel les particules reposent.

Le rouleau 130 peut être remplacé par un autre système de dépose approprié, tel qu'un dévidoir (ou trémie) associé à une lame de raclage, à un couteau ou à une brosse, apte à transvaser et étaler la poudre en couche.

Le système de pilotage 150 comprend par exemple au moins un miroir 155 orientable sur lequel le faisceau laser 195 se réfléchit avant d'atteindre une couche de poudre dont chaque point de la surface se trouve située toujours à la même hauteur par rapport à la lentille de focalisation, contenue dans le système de focalisation 154, la position angulaire de ce miroir 155 étant pilotée par une tête galvanométrique pour que le faisceau laser balaye au moins une région de la première couche de poudre, et suive ainsi un profil de pièce pré-établi.

La machine fonctionne de la façon suivante. On dépose à l'aide du rouleau 130 une première couche 110 de poudre d'un matériau sur le support de construction 180, cette poudre étant transvasée depuis un bac d'alimentation 170 lors d'un mouvement aller du rouleau 130 puis elle est raclée, et éventuellement légèrement compactée, lors d'un (ou de plusieurs) mouvement(s) de retour du rouleau 130. L'excédent de poudre est récupéré dans le bac de recyclage 140. On porte une région de cette première couche 110 de poudre, par balayage avec le faisceau laser 195, à une température supérieure à la température de fusion de cette poudre (température de liquidus). La tête galvanométrique est commandée selon les informations contenues dans la base de données de l'outil informatique utilisé pour la conception et la fabrication assistées par ordinateur de la pièce à fabriquer. Ainsi, les particules de poudre 160 de cette région de la première couche 110 sont fondues et forment un premier cordon 115 d'un seul tenant, solidaire avec le support de construction 180, par exemple pour former une paroi inférieure du caisson. On abaisse le support 180 d'une hauteur correspondant à l'épaisseur déjà définie de la première couche (entre 20 et 100 µm et en général de 30 à 50 µm). L'épaisseur de la couche de poudre à fusionner ou à consolider reste une valeur variable d'une couche à l'autre car elle est fort dépendante de la porosité du lit de poudre et de sa planéité alors que le déplacement pré-programmé du support 180 est une valeur invariable au jeu près. On dépose ensuite une deuxième couche 120 de poudre sur la première couche 110 et sur ce premier cordon 115, puis on chauffe par exposition au faisceau laser 195 une région de la deuxième couche 20 qui est située partiellement ou complètement au-dessus de ce premier cordon 115, de telle sorte que les particules de poudre de cette région de la deuxième couche 120 sont fondues, avec au moins une partie du premier élément 15, et forment un deuxième cordon d'un seul tenant ou consolidé 125, l'ensemble de ces deux cordons 115 et 125 formant un bloc d'un seul tenant. A cet effet, le deuxième cordon 125 est avantageusement déjà entièrement lié dès qu'une partie de ce deuxième cordon 125 se lie au premier élément 115. On peut ainsi surépaissir la paroi inférieure du caisson si la fusion d'une seule couche de poudre n'est pas suffisante, ou bien commencer à réaliser les parois latérales du caisson. On poursuit ensuite ce processus de construction de la pièce couche par couche en ajoutant des couches supplémentaires de poudre sur l'ensemble déjà formé. Le balayage avec le faisceau 195 permet de construire chaque couche en lui donnant une forme en accord avec la géométrie de la pièce à réaliser. Les couches inférieures de la pièce se refroidissent plus ou moins vite au fur et à mesure que les couches supérieures de la pièce se construisent. La dernière étape consiste ici à réaliser la paroi supérieure du caisson.

On comprend que, dans le cas où le caisson est fermé de manière étanche lors de la fabrication additive, sa cavité interne devrait être entièrement remplie de poudre métallique, en particulier celle utilisée pour la fabrication du caisson.

Afin de diminuer la contamination de la pièce, par exemple en oxygène dissous, en oxyde(s) ou en un autre polluant lors de sa fabrication couche par couche telle que décrite ci-dessus, cette fabrication doit être effectuée dans une enceinte à degré d'hygrométrie contrôlée et adaptée au couple procédé/matériau, remplie d'un gaz neutre (non réactif) vis-à-vis du matériau considéré tel que l'azote (N2), l'argon (Ar) ou l'hélium (He) avec ou non addition d'une faible quantité d'hydrogène (H2) connu pour son pouvoir réducteur. Un mélange d'au moins deux de ces gaz peut être aussi considéré. Pour empêcher la contamination, notamment par l'oxygène du milieu environnant, il est d'usage de mettre cette enceinte en surpression.

Ainsi selon l'état de l'art actuel, la fusion sélective ou le frittage sélectif par laser permet de construire avec une bonne précision dimensionnelle des pièces faiblement polluées dont la géométrie en trois dimensions peut être complexe.

La fusion sélective ou le frittage sélectif par laser utilise en outre de préférence des poudres de morphologie sphérique, propres (c'est-à-dire non contaminées par des éléments résiduels provenant de la synthèse), très fines (la dimension de chaque particule est comprise entre 1 et 100 µm et de préférence entre 45 et 90 µm), ce qui permet d'obtenir un excellent état de surface de la pièce finie. La poudre est de préférence en alliage métallique, par exemple à base nickel.

La fusion sélective ou le frittage sélectif par laser permet par ailleurs une diminution des délais de fabrication, des coûts et des frais fixes, par rapport à une pièce moulée, injectée ou usinée dans la masse.

A partir de la granulométrie, de la densité et du taux de compacité de la poudre utilisée pour la fabrication du caisson, ainsi que du volume interne du caisson, il est possible de déterminer la masse de la poudre contenue dans le caisson. Cette masse peut être variée en retirant une partie de la poudre contenue dans le caisson. Pour cela, plusieurs options sont possibles.

La première option consiste à percer un orifice 108 dans le caisson (figure 6 - dessin de gauche) de façon à évacuer une quantité prédéterminée de poudre, puis à boucher l'orifice 108 par exemple par soudage 110, de façon à rendre le caisson étanche. Une autre option consiste à réaliser le caisson par fabrication additive directement avec l'orifice, qui peut ensuite, après évacuation de poudre, être rebouché, comme évoqué ci-dessus. Une autre option consisterait enfin à réaliser un caisson tel que celui de la figure 4, puis à le percer pour en évacuer de la poudre avant de refermer l'orifice d'évacuation de la poudre, par exemple par soudage.

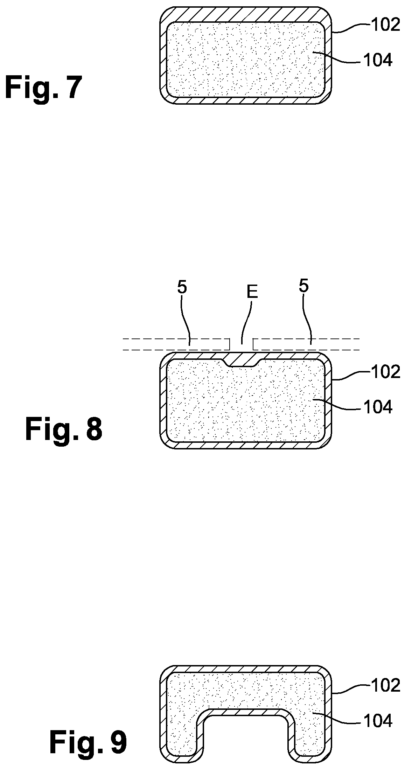

La figure 7 illustre une variante de réalisation de l'invention dans laquelle le caisson a, contrairement au mode de réalisation de la figure 4 qui a des parois d'épaisseur sensiblement identiques, des parois présentant des épaisseurs différentes ou des surépaisseurs localisées. C'est notamment le cas de la paroi supérieure du caisson, configurée pour coopérer par appui et friction avec les plateformes de deux aubes adjacentes, lorsque l'amortisseur est dans le logement situé sous ces plateformes. L'épaisseur des parois du caisson peut être comprise entre 0,1 et 1mm.

En variante, et comme représenté à la figure 8, une surépaisseur localisée au droit de l'espace inter-plateformes E pourrait être prévue dans la paroi supérieure du caisson, afin d'éviter un phénomène de fluage entre les plateformes en fonctionnement.

Dans encore une autre variante représentée à la figure 9, la paroi inférieure du caisson est surélevée pour former un plancher et ajuster automatiquement le volume maximal de poudre contenu dans le caisson à la fin du procédé de fabrication additive. La forme inférieure de l'amortisseur peut ainsi être adaptée pour ajuster le volume de poudre à enfermer mais aussi assurer le maintien de l'amortisseur dans son logement.

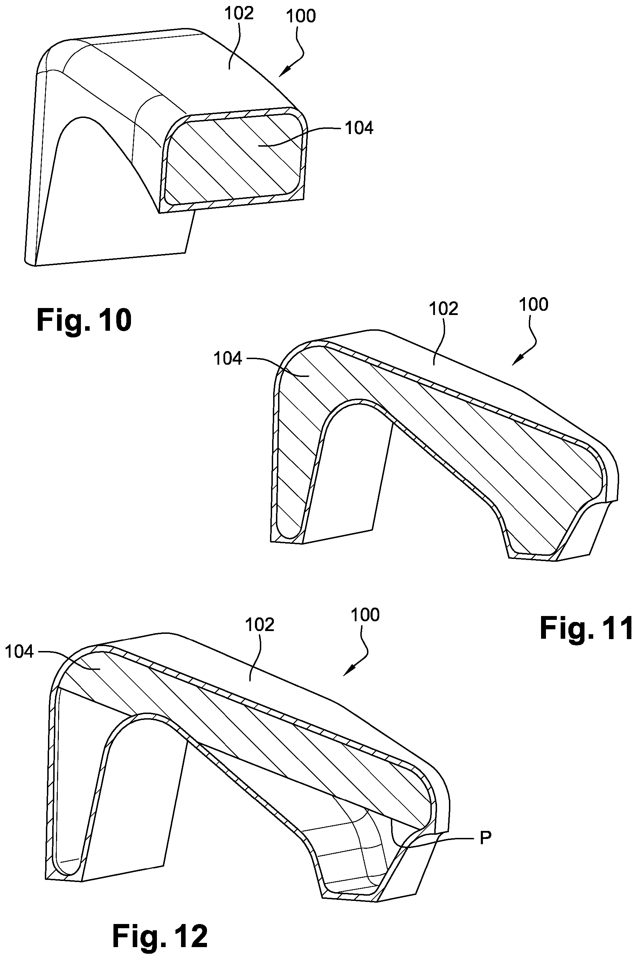

Les figures 10 et 11 représentent une autre variante de réalisation de l'amortisseur dont le caisson a une forme plus complexe, dite ici à bords tombés. Le volume interne du caisson peut être entièrement rempli de poudre.

Dans la variante de réalisation de la figure 12, seule une partie du volume interne du caisson est remplie de poudre. La poudre peut être située dans une partie basse du volume interne ou maintenue dans une partie haute, par exemple par un plancher P réalisée simultanément au caisson lors de sa fabrication additive.

Dans l'application décrite ci-dessus, sous l'effet du champ centrifuge, la turbine étant en rotation, les amortisseurs 100 vont se plaquer contre les faces intérieures 51 des plateformes 50 pour favoriser l'effet d'amortissement en vibration par les forces de frottement, en particulier à la résonance.

Par ailleurs, les pieds des pales peuvent être des pieds marteau, à la place des pieds de sapin, les logements des amortisseurs étant toujours définis par les échasses des pieds d'aubes.

## Revendications

1. Rotor de turbomachine, comportant un disque (3) portant des aubes (4), chaque aube comportant une pale reliée par une plateforme (5) à un pied, des logements (20) étant définis entre les plateformes des aubes et le disque, et des amortisseurs étant montés dans au moins certains desdits logements, chaque amortisseur comprenant une première partie de structure (102) configurée pour être au contact d'une plateforme dont les vibrations sont à amortir, et une seconde partie de masse (104) configurée pour assurer une fonction d'amortissement de ces vibrations, **caractérisé en ce que** chaque logement est limité par la plateforme, deux échasses (41) de pieds d'aubes adjacentes et une plaquette de freinage arrière (31), pour bloquer les pieds dans le disque, et **en ce que** la seconde partie de masse est sous la forme d'une poudre et la première partie de structure est sous la forme d'un caisson contenant ladite poudre.

2. Rotor selon la revendication 1, dans lequel le caisson est fermé de manière étanche pour éviter que la poudre ne s'échappe involontairement dudit caisson.

3. Rotor selon la revendication 1 ou 2, dans lequel la poudre occupe l'intégralité du volume interne dudit caisson.

4. Rotor selon la revendication 1 ou 2, dans lequel la poudre occupe une partie seulement du volume interne dudit caisson.

5. Rotor selon l'une des revendications précédentes, dans lequel le caisson a une forme parallélépipédique.

6. Rotor selon l'une des revendications précédentes, dans lequel le caisson et la poudre sont réalisés dans un même matériau métallique.

7. Rotor selon l'une des revendications précédentes, dans lequel le caisson est obtenu par fusion d'une poudre identique à celle contenue dans le caisson.

## Patentansprüche

1. Rotor für ein Turbotriebwerk, umfassend eine Scheibe (3), die Schaufeln (4) trägt, wobei jede Schaufel ein Blatt umfasst, das durch eine Plattform (5) mit einem Fuß verbunden ist, wobei zwischen den Plattformen der Schaufeln und der Scheibe Aufnahmen (20) definiert sind, und wobei in mindestens gewissen dieser Aufnahmen Dämpfer montiert sind, wobei jeder Dämpfer ein erstes Strukturteil (102), das konfiguriert ist, um mit einer Plattform, von der die Vibrationen zu dämpfen sind, in Kontakt vorzuliegen, und ein zweites Massenteil (104) beinhaltet, das konfiguriert ist, um eine Dämpfungsfunktion dieser Vibrationen sicherzustellen, **dadurch gekennzeichnet, dass** jede Aufnahme durch die Plattform, zwei Stelzenteile (41) der angrenzenden Füße der Schaufeln und eine hintere Bremsplatte (31), um die Füße in der Scheibe zu blockieren, begrenzt ist,
und dadurch, dass das zweite Massenteil in Form von Pulver vorliegt und das erste Strukturteil in Form eines Gehäuses vorliegt, das das Pulver enthält.

2. Rotor nach Anspruch 1, wobei das Gehäuse auf eine Weise verschlossen ist, um zu vermeiden, dass das Pulver unbeabsichtigt aus dem Gehäuse austritt.

3. Rotor nach Anspruch 1 oder 2, wobei das Pulver die Gesamtheit des internen Volumens des Gehäuses einnimmt.

4. Rotor nach Anspruch 1 oder 2, wobei das Pulver nur einen Teil des internen Volumens des Gehäuses einnimmt.

5. Rotor nach einem der vorstehenden Ansprüche, wobei das Gehäuse eine parallelepipedische Form aufweist.

6. Rotor nach einem der vorstehenden Ansprüche, wobei das Gehäuse und das Pulver aus einem gleichen metallischen Material gefertigt sind.

7. Rotor nach einem der vorstehenden Ansprüche, wobei das Gehäuse durch Schmelzen eines Pulvers erhalten wird, das mit dem in dem Gehäuse enthaltenen identisch ist.

## Claims

1. A turbomachine rotor, comprising a disk (3) carrying vanes (4), each vane comprising a blade connected by a platform (5) to a root, recesses (20) being defined between the platforms of the vanes and the disk, and vibration dampers being mounted in at least some of said recesses, each vibration damper comprising a first structural portion (102) configured to be in contact with a platform of which the vibrations are to be dampened, and a second mass portion (104) configured to carry out a function of damping these vibrations, **characterised in that** each recess is bounded by the platform, two adjacent vane root supports and a rear pad to lock the root in the disk, and **in that** the second mass portion is in the form of a powder and the first structural portion is in the form of a box containing said powder.

2. The rotor according to claim 1, wherein the box is closed in a sealed manner to prevent the powder from unintentionally escaping from said box.

3. The rotor according to claim 1 or 2, wherein the powder occupies the entirety of the internal volume of said box.

4. The rotor according to claim 1 or 2, wherein the powder occupies only a portion of the internal volume of said box.

5. The rotor according to any one of the preceding claims, wherein the box has a substantially parallelepipedic general shape.

6. The rotor according to any one of the preceding claims, wherein the box and the powder are made of the same metallic material.

7. The rotor according to any one of the preceding claims, in which the box is obtained by melting a powder identical to that contained in the box.
